# FASCICULE DE BREVET EUROPEEN

(11) **EP 1 426 638 B1**
(45) Date de publication et mention de la délivrance du brevet: **08.02.2006**
(21) Numéro de dépôt: 03356190.3
(22) Date de dépôt: 01.12.2003
(51) Int. Cl.: F16C 1/26, B60K 20/02

(54) **Dispositif de fixation de cables de commande entre un boitier support recevant un levier de commande et une boite de vitesses de véhicules.**
Befestigungsvorrichtung für Steuerkabel zwischen einem Trägergehäuse mit einem Steuerhebel und einem Kraftfahrzeuggetriebe
Fixing device for control cables between a casing support receiving a control lever and a vehicle gearbox

(30) Priorité: 03.12.2002 FR 0215396
(43) Date de publication de la demande: 09.06.2004
(73) Titulaire: Dura Automotive Systems, 91924 Bondoufle (FR)
(72) Inventeur: PRADIER, Philippe, 42390 Sorbiers (FR)
(74) Mandataire: Thivillier, Patrick

(56) Documents cités:
- EP-A- 0 347 389
- EP-A- 0 733 814
- EP-A- 0 813 002
- FR-A- 2 533 985
- FR-A- 2 622 650

## Description

L'invention se rattache au secteur technique des équipements pour véhicules automobiles et plus particulièrement à la fixation des câbles de commande, notamment de sélection de passage des boîtes de vitesses, notamment mécaniques.

On rappelle, d'une manière connue, qu'un ensemble de boîte de vitesses comprend un boîtier support fixé au niveau du plancher du véhicule automobile pour recevoir, avec capacité de déplacement angulaire, un levier. Le levier est accouplé, généralement au niveau de sa partie inférieure, à la boîte de vitesses en tant que telle, par des câbles de commande, notamment pour la sélection et le passage des vitesses. Le boîtier support et la boîte de vitesses sont donc assujettis à deux câbles indépendants, l'un pour la sélection des vitesses, l'autre pour le passage des vitesses.

Outre l'accouplement des extrémités des câbles aux organes correspondants, soit du boîtier, soit de la boîte, il est nécessaire d'assurer la fixation des câbles au niveau dudit boîtier et au niveau de ladite boîte.

Les solutions actuellement utilisées ne donnent pas totalement satisfaction. En effet, dans la plupart des solutions techniques proposées, les câbles de commande doivent être équipés, au niveau de chacune de leurs extrémités, de pièces de liaison indépendantes qu'il convient de fixer sur le câble. Les pièces de liaison intermédiaires comprennent des agencements, par exemple sous forme de gorges, aptes à coopérer avec des agencements complémentaires sous forme, par exemple, d'échancrures, que présentent une partie du boîtier et, par exemple, une équerre indépendante montée et fixée sur les boîtes de vitesses.

Ces solutions sont relativement onéreuses étant donné qu'elles nécessitent de préalablement équiper les câbles de commande de pièces intermédiaires de liaison. On observe également que la fixation en tant telle du câble par l'intermédiaire de cette pièce rapportée, tant au niveau du boîtier support de la boîte de vitesses, peut être délicate à réaliser.

Selon le brevet FR 2 622 650, le câble est rendu solidaire d'un embout qui présente des agencements de clipage aptes à coopérer avec la forme complémentaire d'une douille rendue solidaire d'un support.

L'invention s'est fixée pour but de remédier à ces inconvénients, de manière simple, sûre, efficace et rationnelle.

Le problème que se propose de résoudre l'invention est de supprimer les pièces intermédiaires de liaison qui équipaient préalablement les câbles et d'assurer la fixation directement au niveau du boîtier support recevant le levier de commande et du support que présente la boîte de vitesses.

Pour résoudre un tel problème, il a été conçu et mis au point un dispositif de fixation d'un câble de commande entre un boîtier support recevant un levier de commande et un support d'une boîte de vitesse de véhicule, les câbles étant montés avec capacités de déplacement dans un corps du boîtier et dans un corps du support.

Selon l'invention, le problème posé résulte de la combinaison des caractéristiques relevant de la revendication 1.

Pour résoudre le problème posé d'assurer la fixation du câble au niveau du boîtier support de la boîte de vitesses, les formes complémentaires de clipage sont constituées par des ergots profilés formés périphériquement sur la portée d'assemblage et par des languettes déformables élastiquement formées périphériquement en débordement de l'organe de verrouillage sous forme d'une bague.

Pour résoudre le problème posé d'assurer la fixation du câble au niveau du boîtier support de la boîte de vitesses, les formes complémentaires de clipage sont constituées par des ergots profilés formés périphériquement sur la portée d'assemblage et par des languettes déformables élastiquement formées périphériquement en débordement de l'organe de verrouillage sous forme d'une bague.

Dans une application avantageuse de l'invention, le boîtier et le support présentent chacun deux agencements complémentaires correspondant aux câbles de commande de passage et de sélection des vitesses.

L'invention est exposée ci-après plus en détail à l'aide des figures des dessins annexés dans lesquels :
- la figure 1 est une vue à caractère purement schématique montrant la liaison par câbles entre le boîtier recevant le levier de commande et la boîte de vitesses ;

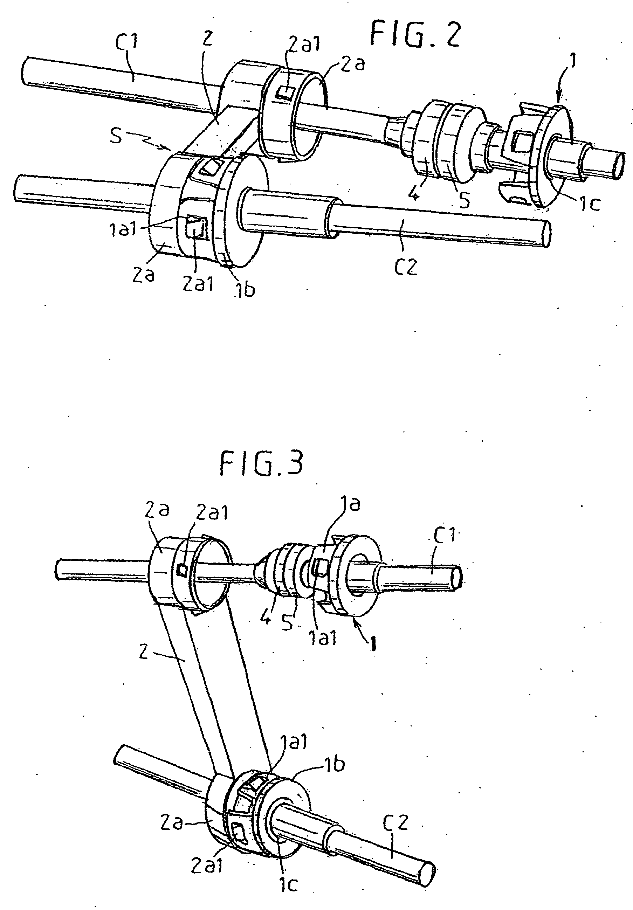

- la figure 2 est une vue en perspective montrant la réalisation d'un support équipé du dispositif selon l'invention et destiné à être fixé sur une partie de la boîte de vitesses, les câbles étant présentés avant fixation sur la partie correspondante du boîtier ;
- la figure 3 est une we semblable à la figure 2 considérée selon un autre angle de perspective ;

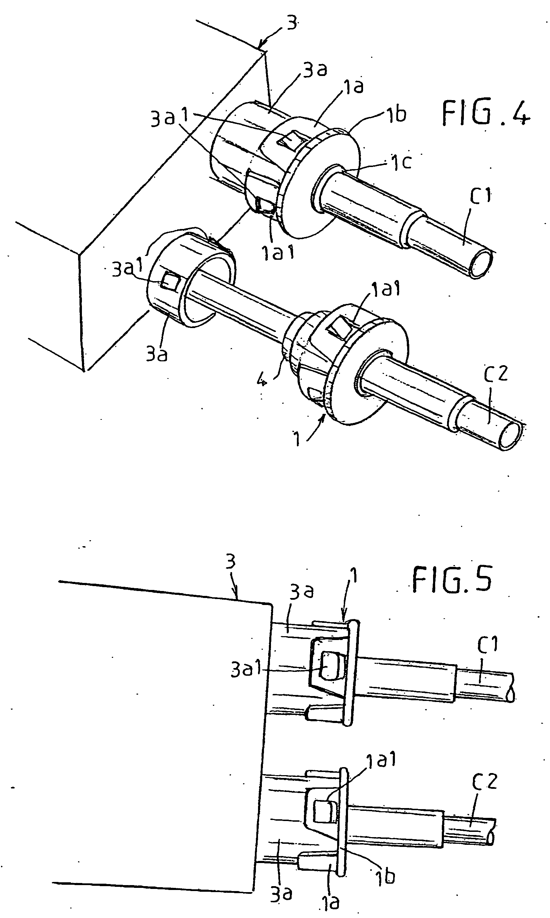

- la figure 4 est une vue partielle du boîtier, avant fixation de l'un des câbles de commande de passage ou de sélection ;
- la figure 5 est une vue correspondant à la figure 4 après fixation des deux câbles ;
- la figure 6 est une vue coupe longitudinale montrant la fixation d'un câble au niveau des agencements spécifiques du boîtier ou du support.

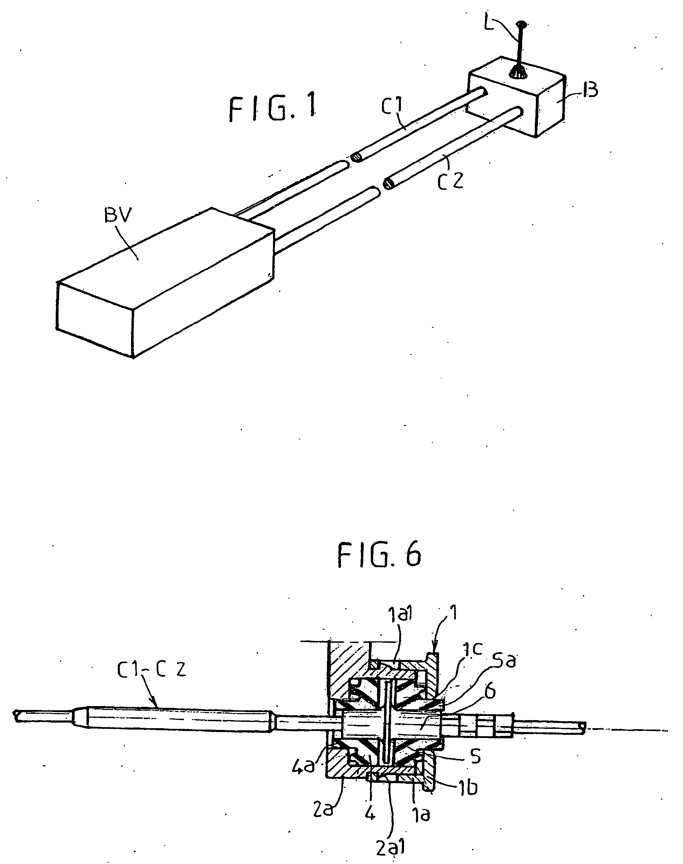

On a illustré, figure 1, par une vue à caractère purement schématique, un exemple de système de commande d'une boîte de vitesses. Le levier de commande (L) est monté avec capacité d'articulation dans un boîtier (B) situé, par exemple, au niveau du plancher du véhicule à l'intérieur de l'habitacle. Le levier (L) est accouplé par des câbles de commande (C1) et (C2) aux organes correspondants de la boîte de vitesses (BV). Le câble (C1) correspond, par exemple, à la sélection des vitesses, tandis que le câble (C2) correspond à leur passage.

Le problème que se propose de résoudre l'invention est d'assurer la fixation des câbles (C1) et (C2), tant au niveau du boîtier (B) que de la boîte de vitesses (BV). Plus particulièrement, au niveau de la boîte de vitesses (BV), la fixation des câbles (C1) et (C2) s'effectue par un support (S) présentant des agencements de fixation sur une partie de ladite boîte de vitesses.

Selon les caractéristiques à la base de l'invention, tant le boîtier (B) que le support (S) intègre, directement lors de la fabrication, des agencements pour la fixation des câbles (C1) et (C2). Pour l'essentiel, ces agencements complémentaires sont constitués par les portées d'assemblage formées directement sur une partie du boîtier (B) ou du support (S) et par un organe indépendant de verrouillage (1). Par exemple, le corps (2) du support (S), réalisé avantageusement en matière plastique, présente directement lors de sa fabrication, deux portées d'assemblage (2a). Les portées d'assemblage (2a) peuvent être établies ou non dans un même plan et d'un même côté, ou de part et d'autre du corps (2).

De la même façon, le corps (3) du boîtier support (B) recevant le levier de commande, présente, directement lors de sa fabrication par injection d'une matière plastique par exemple, deux portées d'assemblage (3a).

Chacune des différentes portées (2a) et (3a) présente périphériquement des ergots (2a1), (3a1) régulièrement répartis sur la circonférence. Ces ergots (2a1) et (3a1) sont profilés, de manière à former une rampe d'entrée pour permettre le clipage de l'organe de verrouillage (1), comme il sera indiqué dans la suite de la description. Chacune des portées (2a) et (3a) présente un alésage débouchant et épaulé (2a2), (3a2). Les alésages (2a2), (3a2) permettent donc le libre engagement et le débordement des câbles (C1) et (C2), et leur blocage en translation, en combinaison avec une partie que présente chacun desdits câbles.

Cette partie est constituée par des bagues tampons en matière caoutchouteuse (4) et (5) emmanchées sur une douille (6) que présente, par exemple, la gaine du câble (figure 6). D'une manière connue, ces bagues tampons (4), (5), en matière caoutchouteuse, font office d'amortisseurs aux bruits et aux vibrations. Ces bagues (4) et (5) ont une portée épaulée (4a), (5a) pour être centrées en combinaison avec les portées internes épaulées que présentent les portées d'assemblage (2a) - (3a) et l'organe de verrouillage (1).

L'organe de verrouillage (1) est constitué par une bague comportant des languettes (1a) déformables élastiquement et formées périphériquement, perpendiculairement à une face d'appui (1b). Ces languettes (1a) présentent une ouverture (1a1) apte à coopérer avec les ergots profilés (2a1), (3a1). La face d'appui (1b) de la bague de verrouillage (1) présente une ouverture (1c) apte à être centrée sur la portée épaulée des éléments amortisseurs (5).

Compte tenu des caractéristiques à la base de l'invention, la fixation des câbles, tant au niveau du boîtier que du support solidaire de la boîte de vitesses, est particulièrement simple et efficace. En effet, l'organe de verrouillage (1) étant préalablement engagé librement sur la gaine des câbles (C1) et (C2), il suffit de les positionner, par l'intermédiaire notamment des bagues amortisseurs (4), (5), à l'intérieur des portées d'assemblage (2a) et (3a) qui assurent le positionnement et le blocage en translation de chacun des câbles, puis de les verrouiller, en clipant, l'organe (1) sur chacune desdites portées (2a) et (3a).

Compte tenu de ces dispositions, il en résulte que la fonction de fixation est intégrée directement au niveau du boîtier ou du support, de sorte qu'il n'est plus nécessaire d'équiper préalablement les câbles de corps intermédiaires de fixation.

Les avantages ressortent bien de la description.

## Revendications

1. Dispositif de fixation de câbles de commande entre un boîtier support (B) recevant un levier de commande et un support (S) d'une boîte de vitesse de véhicule, les câbles étant montés avec capacité de déplacement dans un corps (3) du boîtier (B) et dans un corps (2) du support (S), comprenant pour chaque câble ;
- une portée d'assemblage (3a) ou (2a) formée directement sur une partie du corps (3) ou (2), rendu solidaire de la boite de vitesses ;
- un organe indépendant de verrouillage (1) monté libre en translation sur les câbles ;
- l'organe de verrouillage présente des formes de clipage (1a) aptes à coopérer avec des formes complémentaires (3a1) ou (2a1) que présente ladite portée (3 a) ou (2a) ;
- chacune desdites portées présente un alésage débouchant et épaulé permettant le libre engagement le débordement des câbles ;
**caractérisé en ce qu'**il comprend
- des bagues tampons (4, 5) en matière caoutchouteuse qui sont rendues solidaires de chacun des câbles et présentent une portée épaulée pour être centrées en combinaison avec une portée interne épaulée que présentent les portées d'assemblage (2a) ou (3a) et l'organe de verrouillage (1), afin d'assurer le positionnement et le blocage en translation de chacun desdits câbles.

2. Dispositif selon la revendication 1, **caractérisé en ce que** les formes complémentaires de clipage sont constituées par des ergots profilés (3a1) ou (2a1) formés périphériquement sur la portée d'assemblage (3a) ou (2a) et par des languettes (1a) déformables élastiquement formées périphériquement en débordement de l'organe de verrouillage (1) sous forme d'une bague.

3. Dispositif selon la revendication 1, **caractérisé en ce que** le boîtier et le support présentent chacun deux agencements complémentaires correspondant aux câbles de commande de passage et de sélection des vitesses.

## Patentansprüche

1. Befestigungsvorrichtung für Steuerkabel zwischen einem Trägergehäuse (B) mit einem Steuerhebel und einer Halterung (S) für ein Kraftfahrzeuggetriebe, wobei die Kabel derart montiert sind, dass sie in einem Hauptteil (3) des Gehäuses (B) und in einem Hauptteil (2) der Halterung (S) verschoben werden können,
mit folgenden Komponenten für jedes Kabel :
- einer Montageöffnung (3a) oder (2a), die direkt an einem Teil des Hauptstückes (3) oder (2) gebildet wird, und mit dem Getriebe verbunden ist ;
- einem unabhängigen Verriegelungselement (1), das frei verschiebbar an den Kabeln montiert ist ;
- das Verriegelungselement besitzt Clipselemente (1a), die mit zusätzlichen Elementen (3a1) oder (2a1) zusammenwirken können, welche sich an der Montageöffnung (3a) oder (2a) befinden ;
- jede der Öffnungen besitzt eine Durchgangsbohrung mit Bund, welche den freien Eingriff und das Herausragen der Kabel ermöglicht ;
**dadurch gekennzeichnet, dass** sie folgendes besitzt :
- Pufferringe (4, 5) aus Gummi, welche mit jedem der Kabel verbunden sind, und eine Öffnung mit Bund besitzen, so dass sie zusammen mit einer inneren Öffnung mit Bund, welche sich an den Montageöffnungen (2a) oder (3a) und an dem Verriegelungselement (1) befindet, zentriert werden können, um die Positionierung und Verriegelung jedes der Kabel zu gewährleisten.

2. Vorrichtung nach Anspruch 1, **dadurch gekennzeichnet, dass** die zusätzlichen Clipselemente aus profilierten Nocken (3a1) oder (2a1) bestehen, die am Umfang der Montageöffnung (3a) oder (2a) gebildet werden, sowie aus elastisch verformbaren Laschen (1a), die am Umfang des Verriegelungselementes (1) gebildet werden, und in Form eines Ringes vorstehen.

3. Vorrichtung nach Anspruch 1, **dadurch gekennzeichnet, dass** das Gehäuse und die Halterung jeweils zwei zusätzliche Anordnungen besitzen, welche den Durchgangssteuerkabeln und Steuerkabeln für die Wahl der Gänge entsprechen.

## Claims

1. A device for fixing control cables between a housing (B) accommodating a control lever and a support (S) of a the vehicle gearbox, the cables being mounted with the ability to move in a body (3) of housing (B) and in a body (2) of support (S),
comprising, for each cable:
- an assembly bearing surface (3a) or (2a) formed directly on part of body (3) or (2) attached to the gearbox;
- an independent locking unit (1) mounted on the cables with the ability to make translational movements freely;
- the locking unit has clip shapes (1a) capable of cooperating with matching shapes (3a1) or (2a1) that said bearing surface (3a) or (2a) has;
- each of said bearing surfaces has a through bore with a shoulder that allows unobstructed fitting and protrusion of the cables;
**characterised in that** it comprises buffer rings (4, 5) made of a rubbery material that are attached to each of the cables and have a shouldered bearing surface allowing them to be centred in combination with an internal shouldered bearing surface that assembly bearing surfaces (2a) or (3a) and locking unit (1) have in order to ensure positioning and prevention of translational movement of each of said cables.

2. A device as claimed in claim 1, **characterised in that** the matching clip shapes consist of shaped tappets (3a1) or (2a1) formed peripherally on assembly bearing surface (3a) or (2a) and of elastically deformable tongues (1a) formed peripherally on and projecting from the locking unit (1) in the form of a ring.

3. A device as claimed in claim 1, **characterised in that** the housing and the support each have two matching features corresponding to the control cables for changing and selecting gears.
